Europäisches Patentamt

European Patent Office

Office européen des brevets

(19)

(11) **EP 1 338 888 B1**

(12) **EUROPÄISCHE PATENTSCHRIFT**

(45) Veröffentlichungstag und Bekanntmachung des
Hinweises auf die Patenterteilung:
**22.09.2004   Patentblatt 2004/39**

(51) Int Cl.$^7$: **G01N 21/77**, G01N 21/64

(21) Anmeldenummer: **02004187.7**

(22) Anmeldetag: **26.02.2002**

(54) **Verfahren zur Verbesserung der Messgenauigkeit bei Sensoren, insbesondere Bio-Sensoren, die zur Bestimmung der Signale Fluoreszenzstrahlung verwenden**

Method for improving the measurement accuracy of sensors using fluorescence signals, especially bio sensors,

Procédé pour améliorer la précision de détection de détecteurs de fluorescence, notamment de biodétecteurs

(84) Benannte Vertragsstaaten:
**AT BE CH CY DE DK ES FI FR GB GR IE IT LI LU MC NL PT SE TR**

(43) Veröffentlichungstag der Anmeldung:
**27.08.2003   Patentblatt 2003/35**

(73) Patentinhaber: **pe s Gesellschaft für medizinische Diagnosesysteme mbH
04416 Markkleeberg (DE)**

(72) Erfinder:
• **Blum, Uwe
04416 Markkleeberg (DE)**

• **Boll, Peter
82362 Weilheim (DE)**
• **Drobner, Franz
81371 München (DE)**

(74) Vertreter: **Seerig & Hübner
Patentanwälte
Am Alten Bad 6
09111 Chemnitz (DE)**

(56) Entgegenhaltungen:
**EP-A- 0 517 516          WO-A-98/19159
US-A- 5 856 203**

**Beschreibung**

Die Erfindung betrifft ein Verfahren zur Verbesserung der Messgenauigkeit bei Sensoren, insbesondere Bio-Sensoren, die zur Bestimmung der Signale Fluoreszenzstrahlung verwenden, bestehend aus einem Wellenleiter mit mindestens einer Wellenausbreitungsoberfläche als Assay, das einen Reaktanten enthält, der aus einer Molekülspezies besteht, die an einen analytischen Stoff innerhalb eines Testmediums gebunden ist, und aus einem fluoreszierenden Referenzmaterial, das zur Kalibrierung verwendet wird, wobei der Wellenleiter beim Empfang eines Strahlungszugangs-Signales ein Ausgangs-Emissions-Strahlungssignal überträgt.

Aus der DE 69230420 T2, welche den Oberbegriff von Anspruch 1 offenbart, ist ein Sensor für evaneszente Wellen zum Empfang von einem oder mehreren elektromagnetischen Strahlungseingangs-Signalen und zur Abgabe von mindestens zwei Ausgangssignalen bekannt. Das Assay des Sensors besteht aus einem Wellenleiter mit mindestens einer Wellenausbreitungsoberfläche, die einen aus einem Reaktionsmittel bestehenden Überzug enthält, welcher aus einer molekularen Art besteht, die an einen analytischen Stoff innerhalb eines Testmediums gebunden ist. Auf der Wellenleiteroberfläche befindet sich ein fluoreszierendes Referenzmaterial, wobei der Wellenleiter beim Empfang von einem oder mehreren Strahlungseingangs-Signalen ein Eingangs-Emissions-Strahlungssignal mit einer ersten Wellenlänge überträgt, die für mindestens eine analytische Bindungsreaktion bezeichnend ist, und ein getrenntes Ausgangs-Emissions-Strahlungssignal ausgehend von dem Referenzmaterial mit einer zweiten Wellenlänge derart überträgt, dass das Referenzmaterial für die Normalisierung und/oder Kalibrierung des Sensors sorgt.

Beim Gebrauch ermöglicht die Erfindung den Nachweis von sowohl dem Referenzmaterial als auch dem Analyten, so dass ein Mittel zur Normalisierung und Kalibrierung des Systems bezüglich jegliche Abweichungen im Sensor und in der Effizienz der Instrumenten-Sensor-Verbindung, die den Signalzugang und das Auffangen des Signals beeinflussen, bereitgestellt wird. Da jegliche geometrische Abweichungen und Oberflächenunregelmäßigkeiten im Sensor das bekannte Ausgangssignal vom Referenzmaterial auf die gleiche Weise beeinflußt wie das Signal vom Analyten. stellt ein Verhältnis des Ausgangs des Analytsignals zum Ausgang des Referenzsignals einen Wert bereit, der nur mit Unterschieden im Analyten und nicht mit Unterschieden zwischen Sensoren variiert. Um Schwierigkeiten bei der Analyse der Ausgangssignale zu vermeiden, kann das Referenzmaterial so ausgewählt sein, dass es eine Ausgangssignalwellenlänge bereitstellt. die unterschiedlich und/oder leicht vom Signal zu unterscheiden ist, das den Analyten anzeigt. Die Eignung des Sensors für das Referenzsystem ist mit hohem Fertigungsaufwand verbunden. Die DE 69302273 T2 zeigt ein Verfahren zur Verbesserung der Messgenauigkeit in optischen Biosensor-Assays unter Verwendung der Dämpfungswellentechnik, Vorrichtungen zur Verwendung bei einem derartigen Verfahren und die Verwendung. Dabei wird zusätzliche zu dem Liganden in der Probe eine Menge an direkt oder indirekt immobilisierter Spezies ("das Bezugsreagenz") gegeben, die unabhängig von der Menge des in der Probe behandelnden Liganden auf der Messfläche zu einem Anstieg auf ein feststellbares Signal ("das Bezugssignal") führt, wobei vor, während oder anschließend an die Inkubation der Probe das Bezugssignal durch ein Verfahren gemessen wird. Diese Erfindung impliziert einen hohen technischen Aufwand der Vorrichtung zur Verwendung dieses Verfahrens, welches Bezugssignale zur Verbesserung der Messgenauigkeit der Bio-Sensoren auswertet.

Die DE 19781162 T1 bezieht sich auf eine Nachweisvorrichtung zum Bestimmen der chemischen und biologischen Bestandteile in Körperflüssigkeiten, insbesondere zur Selbstüberwachung von Blutzuckerkonzentrationen durch Patienten mit Diabetes, unter Verwendung von Testinstrumenten zum Messen der Analytaktivität auf Teststreifen, die mit geeigneten Reagenzien imprägniert sind. Dabei ist ein Kalibrierchip lösbar am Testinstrument zur elektronischen Kommunikation mit einem Mikroprozessor anschließbar, der den Betrieb des Testinstrumentes steuert. Der Kalibrierchip enthält Kalibrierinformationen, die für das Reagens eindeutig spezifisch sind, das mit einem speziellen Satz von Teststreifen bereitgestellt wird, die mit dem Kalibrierchip geliefert werden. Auf diese Weise lassen sich Losunterschiede im Reagens kompensieren, während der Benutzer diese Information nicht einzugeben oder beizusteuern hat. Dies minimiert Fehler und erleichtert Einsatz und Genauigkeit des Testinstrumentes, insbesondere ist die Verwendung eines falschen Loses von Teststreifen ausgeschlossen. Nachteilig ist, dass diese Kalibrierchips nicht die Qualität bei der Bestimmung von chemischen und biologischen Bestandteilen in Körperflüssigkeiten erhöhen, sondern die Sicherheit im Umgang mit der Nachweisvorrichtung verbessern. Die DE 199639226 A1 zeigt ein tragbares Messgerät zur Bestimmung der Konzentration mindestens einer Substanz in einer Körperflüssigkeit mittels Auswertung eines Teststreifens. Die Teststreifen desselben Typs unterscheiden sich von Herstellungscharge zu Herstellungscharge in ihren Kennlinien. Jeder Charge muss daher eine Eichkennlinie mitgegeben werden, die in das Messgerät einzugeben ist, um eine zuverlässige Messung zu gewährleisten. Diese Voreinstellung des Messgerätes wird häufig vergessen. Um dies zu vermeiden, ist eine Codelesevorrichtung im Gehäuse des Messgerätes derart angeordnet, dass sie einen an der Kassette angebrachten Code beim Einführen der Kassette in das Gehäusefach lesen kann. Die Lesevorrichtung kann beispielsweise von einem Barcodeleser gebildet werden. Dieses Messgerät arbeitet mit einem kalibrierten Teststreifen, jedoch ohne die Messgenauigkeit zu verbessern.

Aufgabe der Erfindung ist es, ein Verfahren zur Verbesserung der Messgenauigkeit bei Sensoren, insbesondere Bio-Sensoren, die zur Bestimmung der Signale Fluoreszenzstrahlung verwenden, bestehend aus einem Wellenleiter mit mindestens einer Wellenausbreitungsoberfläche als Assay, das einen Reaktanten enthält, der aus einer Molekülspezies besteht, die an einen analytischen Stoff innerhalb eines Testmediums gebunden ist, und aus einem fluoreszierenden Referenzmaterial, wobei der Wellenleiter beim Empfang eines Strahlungszugangs-Signales ein Ausgangs-Emissions-Strahlungssignal überträgt, zu entwickeln, bei dem der Fertigungsaufwand verringert ist und die Sensoren mit verbesserter Messgenauigkeit herstellbar sind.

Erfindungsgemäß wird die Aufgabe dadurch gelöst, dass

- an jeden Sensor einer Sensorcharge als Referenzmaterial ein Fluoreszenzstandardstreifen angebracht wird, wobei dieser neben dem Assay, oder davon räumlich getrennt, am Sensor angeordnet ist;

- nachfolgend für jeden angebrachten Fluoreszenzstandardstreifen (FS) der Sensorcharge das Fluoreszenzsignal ($I_{FS}$) mittels Prozess-Fluorimeters ausgemessen und für jeden Sensor ein Korrekturfaktor ($\alpha$) des Fluoreszenzsignales ($I_{FS}$) bezogen auf einen Chargensollwert ($I_0$) gebildet wird;

$$\alpha = \frac{I_{FS}}{I_0}$$

- der interne Korrekturwert $\alpha$ des Sensors auf einen Datenträger, der an jedem Sensor angebracht wird, geschrieben, oder in einer entsprechenden Datenbank abgelegt wird;

- nachfolgend eine Assaykalibrierung vorgenommen wird, wobei aus der Sensorcharge Sensoren als Stichprobe entnommen und mit Kalibratoren mit bekannten Analytkonzentrationen ausgemessen werden, um die Abhängigkeit der Fluoreszenzsignale von der Analytenkonzentration für jedes Assay zu ermitteln;

- nachfolgend aus jedem Datenkörper der Sensoren der Korrekturwert $\alpha$ ausgelesen oder aus der Datenbank entnommen und ein Verhältnis $\beta$ der Fluoreszenzintensitäten zwischen der des Assays ($J_{Assay}$) und der des Fluoreszenzstandardstreifens ($J_{FS}$) gemäß

$$\beta = \alpha \cdot \frac{J_{Assay}}{J_{FS}}$$

gebildet wird,

- aus den Verhältnissen $\beta$ für die einzelnen Analytenkonzentrationen eines jeden einzelnen Sensors der Sensorcharge eine Kalibrierkurve des Sensors ermittelt und am Sensor als Information angebracht oder in der Datenbank eingelesen wird.

- zur Messung einer Analytenkonzentration ( c) einer unbekannten Probe die gemessenen Fluoreszenzsignale von Assay ($J'_{Assay}$) und Fluoreszenzstandardstreifen ($J'_{FS}$) des Sensors ins Verhältnis gesetzt werden und mit dem Korrekturwert $\alpha$ des Sensors multipliziert werden, um das Verhältnis $\beta$ zu erhalten, um aus der Größe $\beta$ und der dem Sensor beigefügten chargenspezifischen Kalibrierkurve (f ( c)) die Analytenkonzentration ( c) der unbekannten Probe zu bestimmen.

Nachfolgend wird die Erfindung anhand eines Ausführungsbeispieles näher erläutert. Es zeigen:

Figur 1 : eine schematische Darstellung der Bestimmung des Korrekturwertes $\alpha$,

Figur 2: eine schematische Darstellung der Assaykalibrierung,

Figur 3: eine schematische Darstellung einer Proben-Messung und

Figur 4: eine Kalibrierkurve eines Sensors.

Ein Sensor besteht aus einem Wellenleiter mit mindestens einer Wellenausbreitungsoberfläche als Assay, die einen Reaktanten enthält, der aus einer Molekülspezies besteht, die an einen analytischen Stoff innerhalb eines Testmediums gebunden ist, und aus einem fluoreszierenden Referenzmaterial, wobei der Wellenleiter beim Empfang eines Strahlungszugangs-Signales ein Ausgangs-Emissions-Strahlungssignal überträgt.

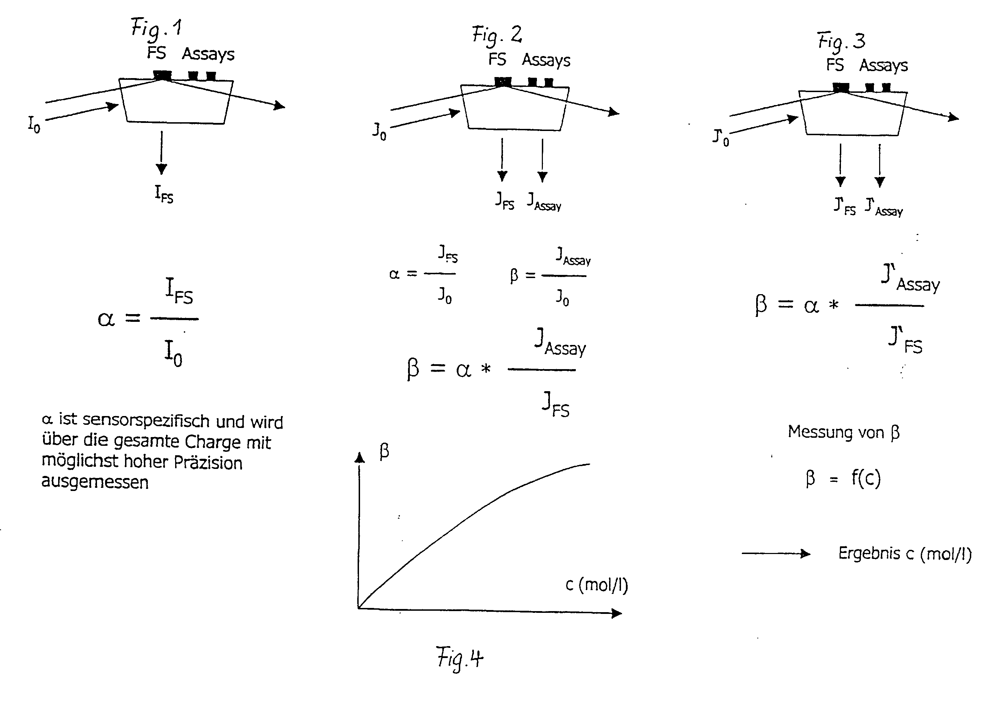

Bei der Produktion einer Sensorcharge wird neben den Reaktanten für die Assays auch ein Fluoreszenzstandardstreifen FS als fluoreszierendes Referenzmaterial auf die Messfläche oder auf eine davon räumlich getrennte Position aufgebracht. Nachfolgend werden die Fluoreszenzstandardstreifen FS sämtlicher Sensoren einer Charge mit einem hochpräzisen Prozess-Fluorimeter ausgemessen und ein für jeden Sensor individueller Korrekturfaktor $\alpha$ gemäß Figur 1 gebildet wird indem das Fluoreszenzsignal $I_{FS}$ des Fluoreszenzstandardstreifens FS auf den Chargensollwert $I_0$ bezogen wird Nachfolgend wird der interne Korrektur-

wert $\alpha$ des Sensors auf einen Datenträger, der an jedem Sensor angebracht wird, geschrieben, oder in einer entsprechenden Datenbank abgelegt. Anschließend wird, wie Figur 2 zeigt, eine Assaykalibrierung vorgenommen, wobei aus der Sensorcharge Sensoren als Stichprobe entnommen und mit Kalibratoren mit bekannten Analytkonzentrationen ausgemessen werden, um die Abhängigkeit der Fluoreszenzsignale $J_{FS}$ von der Analytenkonzentration C für jeden Assay $J_{Assay}$ zu ermitteln. Nachfolgend wird aus dem Datenträger eines jeden Sensors der Korrekturwert $\alpha$ ausgelesen oder aus der Datenbank entnommen und ein Verhältnis $\beta$ der Fluoreszenzintensitäten zwischen der des Assays $J_{Assay}$ und der des Fluoreszenzstandardstreifens JFS gebildet. Aus den Verhältnissen $\beta$ für die einzelnen Analytenkonzentrationen eines jeden einzelnen Sensors der Sensorcharge wird eine Kalibrierkurve f( c), Figur 4. ermittelt und am Sensor als Information angebracht oder in der Datenbank eingelesen. Bei der Analyse von Probenmaterial, Figur 3, dessen unbekannte Analytenkonzentration C zu messen sind, wird bei der Messung durch den Anwender der sensorspezifische Korrekturwert $\alpha$ aus dem sensoreigenen Datenträger ausgelesen oder vom Sensor abgelesen. Die gemessenen Fluoreszenzsignale von Assays $J'_{Assay}$ und Fluoreszenzstandardstreifen $J'_{FS}$ werden ins Verhältnis gesetzt und mit dem Korrekturwert $\alpha$ des Sensors multipliziert, so dass das Verhältnis $\beta$ erhalten wird. Aus der Größe $\beta$ und der dem Sensor beigefügten chargenspezifischen Kalibrierkurve f( c), Figur 4, wird anschließend die Analytenkonzentration C der unbekannten Probe bestimmt.

**Patentansprüche**

1.   Verfahren zur Verbesserung der Messgenauigkeit bei Sensoren, insbesondere Bio-Sensoren, die zur Bestimmung der Signale Fluoreszenzstrahlung verwenden, bestehend aus einem Wellenleiter mit mindestens einer Wellenausbreitungsoberfläche als Assay, das einen Reaktanten enthält, der aus einer Molekülspezies besteht, die an einen analytischen Stoff innerhalb eines Testmediums gebunden ist, und aus einem fluoreszierenden Referenzmaterial, das zur Kalibrierung verwendet wird, wobei der Wellenleiter beim Empfang eines Strahlungszugangssignales ein Ausgangs-Emissions-Strahlungssignal überträgt, **dadurch gekennzeichnet, dass**

    -   an jeden Sensor einer Sensorcharge als Referenzmaterial ein Fluoreszenzstandardstreifen angebracht wird, wobei dieser neben dem Assay, oder davon räumlich getrennt, am Sensor angeordnet ist;

    -   nachfolgend für jeden angebrachten Fluoreszenzstandardstreifen (FS) der Sensorcharge das Fluoreszenzsignal ($I_{FS}$) mittels Prozess-Fluorimeters ausgemessen und für jeden Sensor ein Korrekturfaktor $\alpha$ des Fluoreszenzsignales ($I_{FS}$) bezogen auf einen Chargensollwert ($I_0$) gebildet wird;

$$\alpha = \frac{I_{FS}}{I_0}$$

    -   der interne Korrekturwert $\alpha$ des Sensors auf einen Datenträger, der an jedem Sensor angebracht wird, geschrieben, oder in einer entsprechenden Datenbank abgelegt wird;

    -   nachfolgend eine Assaykalibrierung vorgenommen wird, wobei aus der Sensorcharge Sensoren als Stichprobe entnommen und mit Kalibratoren mit bekannten Analytkonzentrationen ausgemessen werden, um die Abhängigkeit der Fluoreszenzsignale $J_{FS}$ von der Analytenkonzentration für jedes Assay ($J_{Assay}$) zu ermitteln;

    -   nachfolgend aus dem Datenträger des Sensors der Korrekturwert $\alpha$ ausgelesen oder aus der Datenbank entnommen und ein Verhältnis $\beta$ der Fluoreszenzintensitäten zwischen der des Assays ($J_{Assay}$) und der des Fluoreszenzstandardstreifens ($J_{FS}$) gemäß

$$\beta = \alpha \cdot \frac{J_{Assay}}{J_{FS}}$$

gebildet wird,

    -   aus den Verhältnissen $\beta$ für die einzelnen Analytenkonzentrationen eines jeden einzelnen Sensors der Sensorcharge eine Kalibrierkurve (f( c)) des Sensors ermittelt und am Sensor als Information angebracht oder in der Datenbank eingelesen wird und

    -   zur Messung einer Analytenkonzentration ( c) einer unbekannten Probe die gemessenen Fluoreszenzsignale von Assay ($J'_{Assay}$) und Fluoreszenzstandardstreifen ($J'_{FS}$) des Sensors ins Verhältnis gesetzt werden und mit dem Korrekturwert $\alpha$ des Sensors multipliziert werden, um das Verhältnis $\beta$ zu erhalten, um aus der Größe $\beta$ und der dem Sensor beigefügten chargenspezifischen Kalibrierkurve (f( c)) die Analytenkonzentration ( c) der unbekannten Probe zu bestimmen.

## Claims

1.  Method for improving the measurement accuracy of sensors, in particular biosensors, which use fluorescent radiation to determine the signals, consisting of a waveguide with at least one wave propagation surface as an assay containing a reactant, which consists of a molecule species that is bound to an analytical substance within a test medium and is made of a fluorescent reference material used for the calibration, the waveguide transmitting an output emission radiation signal when it receives an input radiation signal, **characterized in that**

    -   a standard fluorescent strip is applied as reference material to each sensor of a sensor batch, this strip being arranged next to the assay or spatially separated from it on the sensor;
    -   for each applied standard fluorescent strip (FS) of the sensor batch, the fluorescence signal ($I_{FS}$) is subsequently evaluated by means of a process fluorimeter, and a correction factor $\alpha$ of the fluorescence signal ($I_{FS}$) with respect to a batch setpoint value ($I_0$) is formed for each sensor

$$\alpha = \frac{I_{FS}}{I_0};$$

    -   the internal correction value $\alpha$ of the sensor is written to a data storage medium which is applied to each sensor, or is stored in a corresponding database;
    -   an assay calibration is subsequently carried out, sensors being taken as random samples from the sensor batch and evaluated using calibrators with known analyte concentrations, in order to ascertain the dependency of the fluorescence signals $J_{FS}$ on the analyte concentration for each assay ($J_{assay}$) ;
    -   the correction value $\alpha$ is subsequently read from the data storage medium of the sensor or taken from the database, and a ratio $\beta$ of the fluorescence intensities is formed between that of the assay ($J_{assay}$) and that of the standard fluorescent strip ($J_{FS}$) according to

$$\beta = \alpha \cdot \frac{J_{assay}}{J_{FS}};$$

    -   a calibration curve (f(c)) of every individual sensor of the sensor batch is ascertained from the ratios $\beta$ of the sensor for the individual analyte concentrations, and is applied as information to the sensor or entered into the database; and
    -   in order to measure an analyte concentration (c) of an unknown sample, the measured fluorescence signals of the assay ($J'_{assay}$) and of the standard fluorescent strip ($J'_{FS}$) of the sensor are divided into each other and multiplied by the correction value $\alpha$ of the sensor so as to obtain the ratio $\beta$, in order to determine the analyte concentration (c) of the unknown sample from the value $\beta$ and the batch-specific calibration curve (f(c)) associated with the sensor.

## Revendications

1.  Procédé d'amélioration de la précision de mesure avec des capteurs, notamment des bio-capteurs qui sont utilisés pour déterminer le rayonnement fluorescent des signaux, composé d'un guide d'ondes comprenant au moins une surface de propagation des ondes sous la forme d'une étude qui contient un réactif composé d'une variété de molécules qui est liée à une matière analytique à l'intérieur d'un milieu d'essai et d'un matériel de référence fluorescent qui est utilisé pour le calibrage, le guide d'ondes transmettant un signal de rayonnement d'émission de sortie lors de la réception d'un signal d'accès de rayonnement, **caractérisé en ce que**

    -   une bande standard fluorescente est appliquée sur chaque capteur d'une charge de capteur sous la forme de matériel de référence, celle-ci étant disposée sur le capteur à côté de l'étude ou séparément de celle-ci ;
    -   ensuite, pour chaque bande standard fluorescente (FS) appliquée de la charge de capteur, le signal de fluorescence ($I_{FS}$) est mesuré par un fluorimètre de procédé et un facteur de correction $\alpha$ du signal de fluorescence ($I_{FS}$) est calculé pour chaque capteur en fonction d'une valeur de consigne de la charge ($I_0$) ;

$$\alpha = \frac{I_{FS}}{I_0}$$

    -   le facteur de correction interne $\alpha$ du capteur est enregistré sur un support de données qui est fixé sur chaque capteur ou stocké dans une base de données correspondante ;
    -   un calibrage de l'étude est ensuite effectué, des capteurs étant prélevés comme échantillons hors de la charge de capteur et mesurés avec des dispositifs de calibrage dont les concentrations d'analyte sont connues afin de déterminer la dépendance entre les signaux de fluorescence $J_{FS}$ et la concentration d'analyte pour chaque étude ($J_{étude}$) ;
    -   la valeur de correction $\alpha$ est ensuite lue depuis le support de données du capteur ou extraite de la base de données et un rapport P des intensités de fluorescence entre celle de l'étude ($J_{\text{étude}}$) et celle de la bande standard fluorescente ($J_{FS}$) est calculé d'après

$$\beta = \alpha . \frac{J_{\text{étude}}}{J_{FS}}$$

- une courbe de calibrage (f(c)) du capteur est déterminée à partir des rapports β pour chacune des concentrations d'analyte de chacun des capteurs de la charge de capteur et cette information est appliquée au capteur ou enregistrée dans la base de données et
- pour mesurer une concentration d'analyte (c) d'un échantillon inconnu, les signaux de fluorescence mesurés de l'étude (J'étude) et des bandes standard fluorescentes ($J'_{FS}$) du capteur sont mis en rapport et multipliés par la valeur de correction α du capteur afin d'obtenir le rapport β afin de déterminer la concentration d'analyte de l'échantillon inconnu à partir de la grandeur β et de la courbe de calibrage (f(c)) spécifique à la charge jointe au capteur.

**Fig.1**

FS  Assays

$I_0$

$I_{FS}$

$$\alpha = \frac{I_{FS}}{I_0}$$

$\alpha$ ist sensorspezifisch und wird über die gesamte Charge mit möglichst hoher Präzision ausgemessen

**Fig. 2**

FS  Assays

$J_0$

$J_{FS}$  $J_{Assay}$

$$\alpha = \frac{J_{FS}}{J_0} \qquad \beta = \frac{J_{Assay}}{J_0}$$

$$\beta = \alpha * \frac{J_{Assay}}{J_{FS}}$$

**Fig. 3**

FS  Assays

$J_0$

$J_{FS}$  $J_{Assay}$

$$\beta = \alpha * \frac{J_{Assay}}{J_{FS}}$$

Messung von $\beta$

$$\beta = f(c)$$

$\longrightarrow$  Ergebnis c (mol/l)

$\beta$

c (mol/l)

**Fig.4**